# FASCICULE DE BREVET EUROPEEN

(11) **EP 2 875 670 B1**
(45) Date de publication et mention de la délivrance du brevet: **06.01.2021**
(21) Numéro de dépôt: 13747453.2
(22) Date de dépôt: 17.07.2013
(51) Int. Cl.: H04W 36/00, H04W 36/14

(54) **GESTION DE LA MOBILITE DANS UN RESEAU DE COMMUNICATION EN FONCTION DE LA QUALITE DE SERVICE D'UN SERVICE ACCEDE**
ROAMING-VERWALTUNG IN EINEM KOMMUNIKATIONSNETZWERK ALS FUNKTION DER DIENSTQUALITÄT EINES AUFGERUFENEN DIENSTES
MANAGEMENT OF ROAMING IN A COMMUNICATION NETWORK AS A FUNCTION OF THE QUALITY OF SERVICE OF AN ACCESSED SERVICE

(30) Priorité: 20.07.2012 FR 1257050
(43) Date de publication de la demande: 27.05.2015
(73) Titulaire: ORANGE, 75015 Paris (FR)
(72) Inventeur: EL MOUMOUHI, Sanaa, F-92120 Montrouge (FR); RADIER, Benoît, F-22700 Perros Guirec (FR)
(74) Mandataire: Regimbeau
(86) Numéro de dépôt international: PCT/FR2013/051719
(87) Numéro de publication internationale: WO 2014/013196

(56) Documents cités:
- EP-A1- 2 571 311
- WO-A1-2012/149954
- JANNE TERVONEN: "Deliverable DA2.2.23 Policy and Charging Control Functionality with WLAN and PBRM", , 22 décembre 2010 (2010-12-22), pages 1-25, XP002696450, Extrait de l'Internet: URL:http://www.futureinternet.fi/publicati ons/ICT_SHOK_FI_Phase2_DA2.2.23_10.pdf [extrait le 2013-05-02]
- 3GPP: "3rd Generation Partnership Project; Technical Specification Group Services and System Aspects; Architecture enhancements for non-3GPP accesses (Release 11)", 3GPP DRAFT; 23402-B30, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 6 juillet 2012 (2012-07-06), XP050625327,
- JANNE TERVONEN: "Deliverable DA2.2.22 Offloading Traffic from Cellular Networks with PBRM", INTERNET CITATION, 30 juin 2010 (2010-06-30), pages 1-39, XP007919591, Extrait de l'Internet: URL:http://www.futureinternet.fi/publicati ons/ICT_SHOK_FI_Phase2_DA2.2.22_10-1.pdf [extrait le 2011-10-19]
- ERICSSON ET AL: "QoS for a 3GPP UE in BBF", 3GPP DRAFT; S2-103647_QOS_3GPP_UE_BBF, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Brunstad; 20100903, 24 août 2010 (2010-08-24), XP050458662,

## Description

### DOMAINE TECHNIQUE GENERAL

L'invention concerne le domaine des communications cellulaires et plus particulièrement la gestion de la mobilité entre des réseaux d'accès 3GPP et non 3GPP, telle que spécifiée par le standard 3GPP dans les spécifications techniques TS 24.302 et TS 24.312.

### ETAT DE LA TECHNIQUE

Lorsqu'un utilisateur d'un terminal de communication mobile est abonné à un opérateur de télécommunication, cet opérateur de télécommunication permet à l'utilisateur de se connecter à un réseau de communication par l'intermédiaire de son terminal mobile, moyennant la souscription d'un abonnement afin d'accéder à plusieurs types de services provenant d'un réseau IP (en anglais, « *Internet Protocol* »), tel que le réseau Internet.

Lorsque ce réseau est un réseau cellulaire 3GPP (par exemple, Edge, 3G, 3G+, 4G, LTE) il comporte un cœur de réseau, ainsi qu'un réseau d'accès 3GPP comportant un ensemble de points d'accès 3GPP (NodeB pour la 3G) auprès desquels le terminal se connecte.

Outre le réseau d'accès 3GPP, l'opérateur peut mettre à disposition de ses abonnées des points d'accès non 3GPP (désignés par le terme « *hot spot »)* pour augmenter la couverture et la capacité du réseau d'accès 3GPP.

Le terminal de communication peut ainsi effectuer une mobilité d'un réseau d'accès 3GPP vers un réseau non 3GPP, et vice versa.

Dans le standard 3GPP, notamment dans les spécifications TS 24.302 et TS 24.312, il est prévu un serveur de découverte de points d'accès (en anglais, « *Access Network Discovery and Selection Function* », (ANDSF)). En particulier, ce serveur ANDSF fournit, sur requête d'un terminal mobile en cours de mobilité, une liste de points d'accès à proximité de la position du terminal mobile. Les points d'accès sont relatifs à des réseaux d'accès non 3GPP (par exemple Wi-Fi, Wimax) et/ou 3GPP (par exemple Edge, 3G, 3G+, 4G, LTE).

En outre, ce serveur ANDSF comporte une base de données comprenant des informations sur la topologie de réseaux d'accès et des informations sur des règles de sélection d'un réseau d'accès, notamment des règles d'un opérateur de télécommunication, ce qui permet d'ordonner la liste des types d'accès et des points accès que le terminal peut utiliser de préférence.

Pour recevoir la liste, le terminal transmet une requête au serveur ANDSF pour que, en cas de changement de position du terminal mobile ou en cas de dégradation de la qualité de la liaison radio, le terminal puisse récupérer la liste des points d'accès disponibles à proximité du terminal mobile.

Ainsi le terminal mobile stocke dans une mémoire une liste de points d'accès auxquels il peut se connecter, préparée par le serveur ANDSF, puis décide d'effectuer une mobilité vers un réseau d'accès de la liste, si nécessaire, en utilisant cette liste de points d'accès.

Cette liste de points d'accès se présente sous la forme d'une liste ordonnée de points d'accès à proximité du terminal mobile, éventuellement classée par types de réseau d'accès (3G, 4G, Wifi, Wimax).

La gestion de la mobilité actuellement déployée par le serveur ANDSF ne se fonde toutefois pas sur les caractéristiques du futur point d'accès auquel va s'attacher le terminal en mobilité. Or si le terminal en cours de mobilité est en train d'accéder à un service, les points d'accès de la liste peuvent ne pas être capables de supporter le service en cours en termes de qualité de service, ce qui peut causer la dégradation de la qualité de service lorsque le terminal mobile s'attache à un autre point d'accès de cette liste.

Il a été évoqué, dans le document « Deliverable DA2.2.23 Policy and Charging Control Functionality with WLAN and PBRM » de Janne Tervonen, publié en 2010, la possibilité d'interfacer la fonction PCRF avec la fonction ANDSF, pour modifier les politiques de cette dernière entité afin d'« off-loader » certains flux consommateurs de ressource d'un point d'accès LTE vers un point d'accès WLAN. Cependant, pour modifier les politiques de l'ANDSF, cette solution tient seulement compte d'informations recueillies par l'entité PCEF au sujet du trafic dans le réseau et ne tient absolument pas compte de la qualité de service des services auxquels accède le terminal. Ainsi, avec une telle solution, un point d'accès WLAN peut être sélectionné pour basculer un flux consommateur de ressource alors qu'il n'est pas capable de fournir une qualité de service suffisante pour ce type de flux.

### PRESENTATION DE L'INVENTION

L'invention permet de prendre en compte la qualité de service offerte par les points d'accès d'un réseau de communication dans le cadre de la gestion de la mobilité d'un terminal et propose à cet effet, selon un premier aspect, un procédé de gestion de la mobilité d'un terminal mobile dans un réseau de communication comprenant une pluralité de points d'accès et un serveur de découverte de points d'accès adapté pour fournir au terminal mobile une liste de points d'accès sélectionnés parmi les points d'accès du réseau, le procédé comprenant les étapes suivantes, mises en œuvre par le serveur de découverte de points d'accès :
réception d'une classe de qualité de service déterminée par un équipement d'application de qualité de service en fonction d'un service auquel accède le terminal mobile ; et
génération de la liste de points d'accès en sélectionnant au moins un point d'accès compatible avec la classe de qualité de service déterminée par l'équipement d'application de qualité de service.

Le procédé de l'invention est avantageusement complétée par les caractéristiques suivantes, prises seules ou en une quelconque de leur combinaison techniquement possible :
- l'équipement d'application de qualité de service transmet à un serveur de règles de qualité de service une requête de détermination de la qualité de service à appliquer au service auquel accède le terminal mobile et reçoit dudit serveur de règles d'application de qualité de service la classe de qualité de service associée audit service.
- la génération de la liste de points d'accès fait suite à une réception, par le serveur de découverte de points d'accès, d'une requête en récupération de ladite liste de points d'accès émise par le terminal mobile, le procédé comprenant en outre la transmission de la liste de points d'accès générée au terminal mobile et la mise à jour de la liste de point d'accès stockée dans le terminal mobile au moyen de la liste de points d'accès générée.
- le point d'accès compatible avec la classe de qualité de service est un point d'accès capable de fournir le service selon une classe de qualité de service offrant un niveau de qualité de service supérieur ou égal à la classe de qualité de service déterminée par l'équipement d'application de qualité de service.
- le serveur de découverte de points d'accès est un serveur ANDSF selon le standard 3GPP et l'équipement d'application de qualité de service est un équipement configuré pour mettre en œuvre une fonction PCEF telle que définie par le standard 3GPP.

Selon un second aspect, l'invention concerne également un serveur de découverte de points d'accès apte à transmettre à un terminal mobile une liste de points d'accès sélectionnés parmi les points d'accès d'un réseau de communication, le serveur de découverte de points d'accès étant configuré en outre pour :
recevoir une classe de qualité de service d'un équipement d'application de qualité de service du réseau de communication, ladite classe de qualité de service étant fonction d'un service auquel accède le terminal mobile ; et
générer la liste de points d'accès en sélectionnant au moins un point d'accès compatible avec la classe de qualité de service reçue de l'équipement d'application de qualité de service.

Selon un troisième aspect, l'invention concerne un équipement d'application de qualité de service apte à recevoir d'un terminal mobile un type de service associé au service auquel accède le terminal mobile, à déterminer une classe de qualité de service en fonction dudit type de service et à transmettre ladite classe de qualité de service à un serveur de découverte de points d'accès.

Selon un quatrième aspect, l'invention concerne un réseau de communication comprenant une pluralité de points d'accès aptes à délivrer un service à un terminal mobile, un équipement d'application de qualité de services et un serveur de découverte de points d'accès,
l'équipement d'application de qualité de services étant configuré pour déterminer une classe de service en fonction d'un service auquel accède le terminal mobile et pour transmettre ladite classe de qualité de service au serveur de découverte de point d'accès; et
le serveur de découverte de points d'accès étant configuré pour générer une liste de points d'accès en sélectionnant au moins un point d'accès compatible avec la classe de qualité de service reçue de l'équipement d'application de qualité de service et pour transmettre au terminal mobile ladite liste de points d'accès.

Selon un cinquième aspect, l'invention concerne un terminal mobile comprenant un module de sélection d'un point d'accès d'un réseau de communication, ce module de sélection étant configuré pour sélectionner le point d'accès dans une liste de points d'accès reçue d'un serveur de découverte de points d'accès du réseau de communication, cette liste de points d'accès étant générée en sélectionnant au moins un point d'accès compatible avec une classe de qualité de service déterminée par un équipement d'application de qualité de service en fonction d'un service auquel accède le terminal mobile.

Selon un sixième aspect, l'invention concerne un produit programme d'ordinateur comprenant des instructions de code pour l'exécution d'un procédé selon le premier aspect de l'invention, lorsque celui-ci est exécuté par un processeur.

En se fondant sur la qualité de service offerte par les points d'accès du réseau de communication, la gestion de la mobilité d'un terminal mobile d'un réseau d'accès à un autre est optimisée.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 illustre schématiquement un réseau de communication d'un opérateur ;
- la figure 2 illustre schématiquement le déploiement de points d'accès d'un réseau de communication d'un opérateur ; et
- la figure 3 illustre un procédé de gestion de la mobilité d'un terminal mobile dans un réseau de communication conforme à un premier mode de réalisation de l'invention.

### DESCRIPTION DETAILLEE DE L'INVENTION

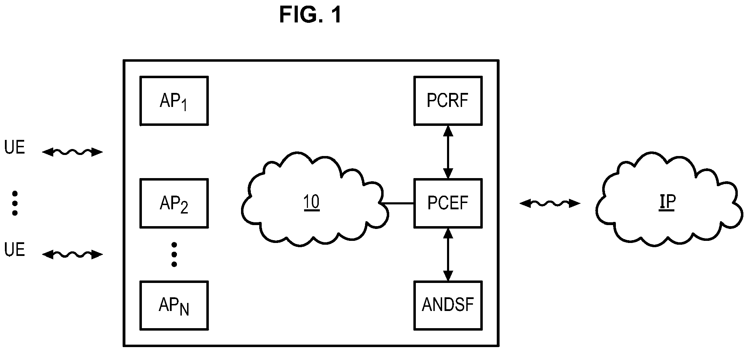

En relation avec la **figure 1****,** un réseau de communication conforme à l'invention est illustré.

Le réseau comprend plusieurs points d'accès APi permettant d'accéder à des réseaux d'accès 10 et au moins un terminal mobile UE. Un réseau d'accès permet au terminal mobile UE de se connecter à un réseau IP (en anglais, « Internet Protocol ») du type Internet pour accéder à des services.

Un point d'accès APi (i=1, 2, 3) définit une zone de couverture Zi (i=1, 2, 3) dans laquelle est localisé le terminal mobile UE par rapport à un point d'accès. Ces points d'accès sont soit des points d'accès 3GPP, soit des points d'accès non 3GPP. Dans le cas d'un réseau d'accès 4G, les points d'accès sont des équipements appelés « eNodeB ». Dans le cas d'un réseau d'accès 3G, les points d'accès sont des « NodeB ». Dans le cas d'un réseau d'accès 2G ou GPRS, les points d'accès sont des BTS (en anglais, « *Base Transceiver Station »).* Dans le cas d'un réseau d'accès WiFi, les points d'accès sont des « *hotspots* ». Enfin, dans le cas d'un réseau d'accès WIMAX, les points d'accès sont des stations de base.

Le réseau comprend un serveur de découverte de points d'accès, désigné par ANDSF, qui permet de gérer une liste de points d'accès, un équipement d'application de qualité de service, désigné par PCEF (en anglais, « *Policy* & *Charging Enforcement Function* »), connecté à serveur de règles de qualité de service, désigné par PCRF (en anglais, « *Policy* & *Charging and Rules Function »*) comprenant une base de données contenant toutes les règles de classes de service QoS fixées par un opérateur en fonction de divers paramètres (type de service, type d'utilisateur, etc.).

Les terminologies ANDSF, PCEF et PCRF sont reprises des standards 3GPP et sont utilisées par la suite, sans que l'invention ne se limite aux seules entités ainsi nommées dans ces standards, l'invention pouvant s'appliquer à tout réseau présentant des entités physiques ayant les mêmes fonctionnalités que ces entités. L'équipement PCEF et le serveur PCRF sont spécifiés en particulier, dans le standard 3GPP, dans la spécification technique TS 23.060.

L'équipement PCEF, en liaison avec le serveur PCRF, permet notamment de gérer la classe de qualité de service d'une session d'un utilisateur jusqu'à un point d'accès APi du réseau, en fixant une classe de qualité QoS associée à chaque session et appliquée pour les sessions jusqu'au point d'accès APi. En particulier, un terminal mobile UE souhaitant accéder à un service via un point d'accès APi auquel il est connecté émet d'abord une requête vers l'équipement PCEF, lequel récupère alors auprès de la base de données du serveur PCRF les règles de classes de qualité de service (typiquement définies par l'opérateur du réseau) et applique cette règle sur la session jusqu'au point d'accès pour délivrer le service au terminal mobile UE considéré.

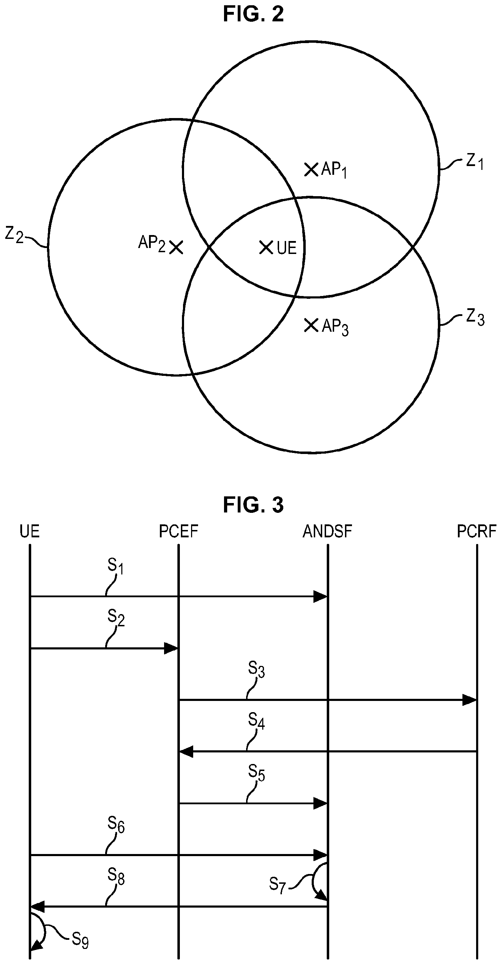

On se réfère maintenant à la **figure 2** qui illustre un terminal mobile UE localisé dans la zone de couverture Z1, Z2, Z3 de trois points d'accès AP1, AP2, AP3 d'un réseau de communication.

On considère que le terminal mobile UE est connecté au point d'accès AP1 et qu'il est en train d'accéder à un certain type de service.

On précise ici que l'on entend par « connecté à un point d'accès », le fait que le terminal mobile UE a une session ouverte avec le point d'accès pour recevoir un service.

On précise aussi que l'on entend par « couvert par un point d'accès », le fait que le terminal mobile UE est localisé dans une zone de couverture d'un point d'accès APi.

Si le terminal mobile UE est mobile dans le réseau, le terminal peut vouloir décider d'effectuer une mobilité du point d'accès AP1 vers un autre point d'accès AP2 ou/et AP3, lequel peut être sélectionné au moyen du procédé de gestion de mobilité décrit ci-après.

En relation avec la **figure 3****,** on décrit un procédé de gestion de la mobilité d'un terminal mobile UE selon un mode de réalisation de la présente invention.

Avant d'effectuer la mobilité entre points d'accès, le terminal mobile UE détecte (étape non détaillée) la nécessité d'initier la procédure de mobilité en se basant sur un évènement déclencheur, par exemple un évènement tel que la dégradation du canal de transmission du service.

Avant d'initier une mobilité, le terminal peut tout d'abord s'authentifier (étape S1) auprès du serveur ANDSF afin d'établir une session de communication avec ce dernier.

Le terminal mobile UE communique ensuite (étape S2) à l'équipement PCEF le type de service auquel il est en train d'accéder (par exemple VoIP ou Streaming), pour la session en cours, au moyen d'un message contenant un identifiant de ce type de service.

Suite à la réception de ce message, l'équipement PCEF détermine une classe de qualité de service QoS correspondant au type de service en question, à appliquer sur la session de service jusqu'au point d'accès.

Selon un premier mode de réalisation illustré sur cette figure 3, cette détermination est réalisée par l'équipement PCEF en transmettant (étape S3) au serveur PCRF une requête de détermination de la classe de qualité de service QoS associée au type de service en question, contenant optionnellement une classe de service proposée par l'équipement PCEF.

En réponse à cette requête, le serveur PCRF détermine la classe de qualité de service QoS attribuée à ce type de service, au moyen des règles de qualités de service stockées dans la base de données de ce serveur PCRF, et transmet (étape S4) à l'équipement PCEF cette classe de qualité de service QoS.

A titre d'exemple, le serveur PCEF peut déterminer que, pour le service demandé, la classe de qualité de service QoS pourrait être d'un niveau égal à 4. L'équipement PCEF récupère alors la classe de qualité de service QoS auprès du serveur PCRF, laquelle peut être inférieure en fonction des règles définies par l'opérateur du réseau (par exemple une classe de qualité de service QoS égale à 3). Ce premier mode de réalisation est particulièrement adapté dans le cas d'un réseau 4G où la détermination de la classe de qualité de service à mettre en place par session est prévue au niveau du serveur PCRF.

De manière alternative, selon un autre mode de réalisation, l'équipement PCEF détermine lui-même la classe de qualité de service QoS correspondant au service auquel accède le terminal mobile UE et transmet cette classe au serveur PCRF, lequel se contente de valider ou non cette classe en fonction des règles de qualité de service définies dans sa base de données et retourne un message de validation, ou de refus de validation, à l'équipement PCEF. Cet autre mode de réalisation est plus particulièrement adapté dans le cas d'un réseau 3G où la détermination de la classe de qualité de service est plutôt prévue au niveau de l'équipement PCEF. La demande de service émise par le terminal UE est ainsi analysée par l'équipement PCEF qui détermine ensuite la classe de qualité de service QoS à mettre en place pour ce service.

Ensuite, l'équipement PCEF transmet (étape S5) au serveur ANSDF la classe de qualité de service QoS, utilisée par la session en cours, telle que récupérée auprès du serveur PCRF et telle qu'elle est appliquée dans le réseau.

De cette façon, le serveur ANDSF est informé de la classe de qualité de service QoS associé au service auquel accède le terminal mobile UE.

Par la suite, le terminal mobile UE envoie (étape S6) une requête en récupération d'une liste de points d'accès au serveur ANDSF, par exemple lorsque ce terminal mobile UE détermine qu'il se trouve en situation de mobilité.

Suite à la réception de cette requête, le serveur ANDSF génère alors (étape S7) la liste de points d'accès à retourner au terminal mobile UE, en priorisant les points d'accès compatibles avec la classe de qualité de service QoS du service auquel accède le terminal mobile UE.

Cette liste est avantageusement une liste ordonnée établie, à partir d'un ensemble de points d'accès possibles du réseau de communication, en rangeant ces points d'accès (éventuellement regroupés par type de point d'accès) en fonction de leur compatibilité avec la classe de qualité de service QoS du service auquel accède le terminal mobile UE, par exemple par ordre croissant de classe de qualité de service QoS que ces points d'accès peuvent offrir. Dans ce cas, les points d'accès apparaissant en premier dans cette liste ordonnée, offrant la meilleure qualité de service par rapport au service utilisé, sont prioritaires par rapport aux suivants, le terminal mobile cherchant d'abord à s'attacher au premier point d'accès de la liste, puis au deuxième point d'accès en cas d'échec d'attachement au premier point d'accès, et ainsi de suite.

A titre d'exemple, avec un service de type voix sur IP (VoIP) associé à une classe prioritaire de qualité de service QoS égale à 1, les points d'accès de type 3G peuvent être indiqués en premier dans cette liste ordonnée (par exemple en priorisant les points d'accès de type 3G par rapport aux points d'accès de type 2G) par rapport aux points d'accès de type WiFi.

Alternativement, cette liste peut se limiter aux points d'accès compatibles avec la classe de qualité de service QoS du service auquel accède le terminal mobile UE, c'est-à-dire aux points d'accès associés à une classe de qualité de service offrant un niveau de qualité de service supérieur ou égal à la classe de qualité de service QoS du service accédé, en excluant les points d'accès ne pouvant pas offrir une telle qualité de service.

Ainsi, en reprenant l'exemple d'un service de type voix sur IP (VoIP) associé à une classe prioritaire de qualité de service QoS égale à 1, les points d'accès de type 2G ou 3G peuvent être ajoutés dans cette liste tandis que les points d'accès de type WiFi ne le sont pas. Avec un service de type « streaming », associé à une classe inférieure de qualité de service QoS égale à 9, tous les points d'accès peuvent être ajoutés à cette liste. Enfin, dans le cas d'un service de type télévision associé à une classe de qualité de service QoS égale à 4, les points d'accès de type 4G ou WiFi peuvent être ajoutés à la liste, les points d'accès 3G peuvent être ajoutés en fonction de la saturation du réseau, tandis que les point d'accès 2G ne le sont pas.

Une fois la liste générée, le serveur ANDSF envoie (étape S8) cette liste au terminal mobile UE afin que ce dernier mette à jour (étape S9) la liste des points d'accès stockés dans sa mémoire, en la remplaçant avec la liste générée par le serveur ANDSF. Ainsi, le terminal mobile UE en cours de mobilité peut se connecter à un autre point d'accès, dans cette liste mise à jour, qui lui permet de continuer de recevoir le service auquel il accède, avant d'enclencher le processus de mobilité, sans dégradation de qualité de service.

L'invention n'est pas limitée au procédé ci-dessus décrit mais concerne également un réseau de communication comprenant : une pluralité de points d'accès APi aptes à délivrer un service à un terminal mobile UE, un équipement PCEF d'application de qualité de services et un serveur de découverte de points d'accès ANDSF.

Dans ce réseau, l'équipement PCEF d'application de qualité de services est configuré pour déterminer une classe de service en fonction d'un service auquel accède le terminal mobile UE et pour transmettre S5 ladite classe de qualité de service, telle qu'appliquée dans le réseau, au serveur de découverte de point d'accès ANDSF.

En outre, le serveur de découverte de points d'accès ANDSF est configuré pour générer (étape S7) une liste de points d'accès en sélectionnant au moins un point d'accès compatible avec la classe de qualité de service reçue de l'équipement PCEF d'application de qualité de service et pour transmettre S8 au terminal mobile UE ladite liste de points d'accès.

Par ailleurs, l'invention concerne également un terminal mobile UE comprenant un module de sélection (implémenté par exemple sous la forme d'un programme d'ordinateur installé dans un mode de traitement comprenant un processeur) d'un point d'accès d'un réseau de communication. Ce module de sélection est configuré spécifiquement pour sélectionner un point d'accès, dans la liste de points d'accès reçue du serveur de découverte de points d'accès ANDSF du réseau de communication, cette liste de points d'accès ayant été générée en sélectionnant au moins un point d'accès compatible avec la classe de qualité de service déterminée par l'équipement d'application de qualité de service PCEF en fonction du service auquel accède le terminal mobile UE.

En outre, l'invention concerne également un produit programme d'ordinateur comprenant des instructions de code pour l'exécution du procédé ci-dessus décrit, lorsque celui-ci est exécuté par un processeur.

## Revendications

1. Procédé de gestion de la mobilité d'un terminal mobile dans un réseau de communication comprenant une pluralité de points d'accès et un serveur de découverte de points d'accès adapté pour fournir au terminal mobile une liste de points d'accès sélectionnés parmi les points d'accès du réseau, le procédé comprenant les étapes suivantes :
réception (S2) par un équipement d'application de qualité de service, d'un message contenant un identifiant d'un type de service auquel est en train d'accéder le terminal mobile ;
réception (S5) par le serveur de découverte de points d'accès d'une classe de qualité de service déterminée par l'équipement d'application de qualité de service en fonction du type de service auquel accède le terminal mobile ; et
génération (S7) par le serveur de découverte de points d'accès de la liste de points d'accès en sélectionnant au moins un point d'accès compatible avec la classe de qualité de service déterminée par l'équipement d'application de qualité de service .

2. Procédé de gestion selon la revendication 1, dans lequel l'équipement d'application de qualité de service transmet (S3) à un serveur de règles de qualité de service une requête de détermination de la qualité de service à appliquer au service auquel accède le terminal mobile et reçoit (S4) dudit serveur de règles d'application de qualité de service la classe de qualité de service associée audit service.

3. Procédé de gestion selon l'une des revendications 1 ou 2, dans lequel la génération de la liste de points d'accès fait suite à une réception (S6), par le serveur de découverte de points d'accès, d'une requête en récupération de ladite liste de points d'accès émise par le terminal mobile, le procédé comprenant en outre la transmission (S8) de la liste de points d'accès générée au terminal mobile et la mise à jour (S9) de la liste de point d'accès stockée dans le terminal mobile au moyen de la liste de points d'accès générée.

4. Procédé de gestion selon l'une des revendications 1 à 3, dans lequel le point d'accès compatible avec la classe de qualité de service est un point d'accès capable de fournir le service selon une classe de qualité de service offrant un niveau de qualité de service supérieur ou égal à la classe de qualité de service déterminée par l'équipement d'application de qualité de service.

5. Procédé selon l'une des revendications 1 à 4, dans lequel le serveur de découverte de points d'accès est un serveur ANDSF selon le standard 3GPP et l'équipement d'application de qualité de service est un équipement configuré pour mettre en œuvre une fonction PCEF telle que définie par le standard 3GPP.

6. Serveur de découverte de points d'accès apte à transmettre à un terminal mobile une liste de points d'accès sélectionnés parmi les points d'accès d'un réseau de communication, le serveur de découverte de points d'accès étant configuré en outre pour :
recevoir (S5) une classe de qualité de service d'un équipement d'application de qualité de service du réseau de communication, ladite classe de qualité de service étant fonction d'un service auquel accède le terminal mobile ; et
générer (S7) la liste de points d'accès en sélectionnant au moins un point d'accès compatible avec la classe de qualité de service reçue de l'équipement d'application de qualité de service.

7. Equipement d'application de qualité de service apte à recevoir d'un terminal mobile un type de service associé au service auquel accède le terminal mobile , à déterminer une classe de qualité de service en fonction dudit type de service et à transmettre ladite classe de qualité de service à un serveur de découverte de points d'accès .

8. Terminal mobile comprenant des moyens configurés pour transmettre à un équipement d'application de qualité de service un type de service associé au service auquel accède le terminal mobile et un module de sélection d'un point d'accès d'un réseau de communication, ledit module de sélection étant configuré pour sélectionner ledit point d'accès dans une liste de points d'accès reçue d'un serveur de découverte de points d'accès dudit réseau de communication, ladite liste de points d'accès étant générée en sélectionnant au moins un point d'accès compatible avec une classe de qualité de service déterminée par un équipement d'application de qualité de service en fonction du type de service auquel accède le terminal mobile.

9. Réseau de communication comprenant une pluralité de points d'accès aptes à délivrer un service à un terminal mobile, un équipement d'application de qualité de services et un serveur de découverte de points d'accès,
l'équipement d'application de qualité de services étant configuré pour recevoir (S2) un message contenant un identifiant d'un type de service auquel est en train d'accéder le terminal mobile et déterminer une classe de service en fonction du type de service auquel accède le terminal mobile et pour transmettre (S5) ladite classe de qualité de service au serveur de découverte de point d'accès ; et
le serveur de découverte de points d'accès étant configuré pour générer (S7) une liste de points d'accès en sélectionnant au moins un point d'accès compatible avec la classe de qualité de service reçue de l'équipement d'application de qualité de service et pour transmettre au terminal mobile ladite liste de points d'accès.

10. Produit programme d'ordinateur comprenant des instructions de code pour l'exécution d'un procédé selon l'une des revendications 1 à 5, lorsque celui-ci est exécuté par un processeur.

## Patentansprüche

1. Verfahren für das Management der Mobilität eines mobilen Endgeräts in einem Kommunikationsnetz, das mehrere Zugangspunkte und einen Server für die Entdeckung von Zugangspunkten, der dafür ausgelegt ist, für das mobile Endgerät eine Liste ausgewählter Zugangspunkte unter den Zugangspunkten des Netzes bereitzustellen, enthält, wobei das Verfahren die folgenden Schritte umfasst:
Empfangen (S2) durch eine Dienstqualitätsanwendungs-Ausrüstung einer Nachricht, die eine Kennung eines Diensttyps enthält, auf den das mobile Endgerät gerade zugreift;
Empfangen (S5) durch den Server für die Entdeckung von Zugangspunkten einer Dienstqualitätsklasse, die durch die Dienstqualitätsanwendungs-Ausrüstung als Funktion des Diensttyps, auf den das mobile Endgerät zugreift, bestimmt wird; und
Erzeugen (S7) durch den Server für die Entdeckung von Zugangspunkten der Liste von Zugangspunkten durch Auswählen wenigstens eines Zugangspunkts, der mit der Dienstqualitätsklasse, die durch die Dienstqualitätsanwendungs-Ausrüstung bestimmt wird, kompatibel ist.

2. Managementverfahren nach Anspruch 1, wobei die Dienstqualitätsanwendungs-Ausrüstung an einen Server für Dienstqualitätsregeln eine Anforderung zum Bestimmen der Dienstqualität, die auf den Dienst anzuwenden ist, auf den das mobile Endgerät zugreift, sendet (S3) und von dem Server für Dienstqualitäts-Anwendungsregeln die Dienstqualitätsklasse, der der Dienst zugeordnet ist, empfängt (S4).

3. Managementverfahren nach einem der Ansprüche 1 oder 2, wobei das Erzeugen der Liste von Zugangspunkten nach einem Empfang (S6) durch den Server für die Entdeckung von Zugangspunkten einer Anforderung zum Wiedergewinnen der Liste von Zugangspunkten, die von dem mobilen Endgerät ausgesendet wird, erfolgt, wobei das Verfahren außerdem das Senden (S8) der erzeugten Liste von Zugangspunkten zu dem mobilen Endgerät und das Aktualisieren (S9) der Liste von Zugangspunkten, die in dem mobilen Endgerät gespeichert ist, anhand der erzeugten Liste von Zugangspunkten umfasst.

4. Managementverfahren nach einem der Ansprüche 1 bis 3, wobei der Zugangspunkt, der mit der Dienstqualitätsklasse kompatibel ist, ein Zugangspunkt ist, der den Dienst gemäß der Dienstqualitätsklasse liefern kann, der ein Dienstqualitätsniveau bietet, das höher oder gleich der Dienstqualitätsklasse ist, die durch die Dienstqualitätsanwendungs-Ausrüstung bestimmt wird.

5. Verfahren nach einem der Ansprüche 1 bis 4, wobei der Server für die Entdeckung von Zugangspunkten ein ANDSF-Server gemäß der 3GPP-Norm ist und die Dienstqualitätsanwendungs-Ausrüstung eine Ausrüstung ist, die konfiguriert ist, eine PCEF-Funktion, wie sie durch die 3GPP-Norm definiert ist, auszuführen.

6. Server für die Entdeckung von Zugangspunkten, der an ein mobiles Endgerät eine Liste ausgewählter Zugangspunkte unter Zugangspunkten eines Kommunikationsnetzes senden kann, wobei der Server für die Entdeckung von Zugangspunkten außerdem konfiguriert ist zum:
Empfangen (S5) einer Dienstqualitätsklasse einer Dienstqualitätsanwendungs-Ausrüstung des Kommunikationsnetzes, wobei die Dienstqualitätsklasse eine Funktion eines Dienstes ist, auf den das mobile Endgerät zugreift; und
Erzeugen (S7) der Liste von Zugangspunkten durch Auswählen wenigstens eines Zugangspunkts, der mit der Dienstqualitätsklasse, die von der Dienstqualitätsanwendungs-Ausrüstung empfangen wird, kompatibel ist.

7. Dienstqualitätsanwendungs-Ausrüstung, die von einem mobilen Endgerät einen Diensttyp empfangen kann, dem der Dienst zugeordnet ist, auf den das mobile Endgerät zugreift, eine Dienstqualitätsklasse als Funktion des Diensttyps bestimmen kann und die Dienstqualitätsklasse an einen Server für die Entdeckung von Zugangspunkten senden kann.

8. Mobiles Endgerät, das Mittel, die konfiguriert sind, an eine Dienstqualitätsanwendungs-Ausrüstung einen Diensttyp zu senden, dem der Dienst zugeordnet ist, auf den das mobile Endgerät zugreift, und ein Modul für die Auswahl eines Zugangspunkts eines Kommunikationsnetzes umfasst, wobei das Auswahlmodul konfiguriert ist, den Zugangspunkt aus einer Liste von Zugangspunkten auszuwählen, die von einem Server für die Entdeckung von Zugangspunkten des Kommunikationsnetzes empfangen wird, wobei die Liste von Zugangspunkten durch Auswählen wenigstens eines Zugangspunkts erzeugt wird, der mit einer Dienstqualitätsklasse kompatibel ist, die durch eine Dienstqualitätsanwendungs-Ausrüstung als Funktion des Diensttyps, auf den das mobile Endgerät zugreift, bestimmt wird.

9. Kommunikationsnetz, das mehrere Zugangspunkte, die an ein mobiles Endgerät einen Dienst liefern können, eine Dienstqualitätsanwendungs-Ausrüstung und einen Server für die Entdeckung von Zugangspunkten umfasst,
wobei die Dienstqualitätsanwendungs-Ausrüstung konfiguriert ist, eine Nachricht zu empfangen (S2), die eine Kennung eines Diensttyps enthält, auf den das mobile Endgerät gerade zugreift, und eine Dienstklasse als Funktion des Dienstes, auf den das mobile Endgerät zugreift, zu bestimmen und die Dienstqualitätsklasse an den Server für die Entdeckung von Zugangspunkten zu senden (S5); und
wobei der Server für die Entdeckung von Zugangspunkten konfiguriert ist, eine Liste von Zugangspunkten durch Auswählen wenigstens eines Zugangspunkts zu erzeugen (S7), der mit der Dienstqualitätsklasse, die von der Dienstqualitätsanwendungs-Ausrüstung empfangen wird, kompatibel ist, und die Liste von Zugangspunkten an das mobile Endgerät zu senden.

10. Computerprogrammprodukt, das Codebefehle enthält, um dann, wenn es von einem Prozessor ausgeführt wird, ein Verfahren nach einem der Ansprüche 1 bis 5 auszuführen.

## Claims

1. Method for managing the mobility of a mobile terminal in a communication network comprising a plurality of access points and an access point discovery server adapted to provide the mobile terminal with a list of access points selected from among the access points of the network, the method comprising the following steps:
reception (S2), by a quality of service application equipment, of a message containing an identifier of a type of service that the mobile terminal is accessing;
reception (S5), by the access point discovery server, of a quality of service class determined by the quality of service application equipment on the basis of the type of service that the mobile terminal accesses; and
generation (S7), by the access point discovery server, of the list of access points by selecting at least one access point compatible with the quality of service class determined by the quality of service application equipment.

2. Management method according to Claim 1, in which the quality of service application equipment transmits (S3) to a quality of service rule server a request to determine the quality of service to be applied to the service that the mobile terminal accesses, and receives (S4) from said quality of service application rule server the quality of service class associated with said service.

3. Management method according to either of Claims 1 and 2, in which the generation of the list of access points follows reception (S6), by the access point discovery server, of a request to retrieve said list of access points that is transmitted by the mobile terminal, the method moreover comprising the transmission (S8) of the generated list of access points to the mobile terminal and the updating (S9) of the list of access points stored in the mobile terminal by means of the generated list of access points.

4. Management method according to one of Claims 1 to 3, in which the access point compatible with the quality of service class is an access point capable of providing the service according to a quality of service class offering a quality of service level higher than or equal to the quality of service class determined by the quality of service application equipment.

5. Method according to one of Claims 1 to 4, in which the access point discovery server is an ANDSF server according to the 3GPP standard and the quality of service application equipment is an equipment configured to implement a PCEF function as defined by the 3GPP standard.

6. Access point discovery server capable of transmitting to a mobile terminal a list of access points selected from among the access points of a communication network, the access point discovery server moreover being further configured to:
receive (S5) a quality of service class of a quality of service application equipment of the communication network, said quality of service class being dependent on a service that the mobile terminal accesses; and
generate (S7) the list of access points by selecting at least one access point compatible with the quality of service class received from the quality of service application equipment.

7. Quality of service application equipment capable of receiving from a mobile terminal a type of service associated with the service that the mobile terminal accesses, of determining a quality of service class on the basis of said type of service and of transmitting said quality of service class to an access point discovery server.

8. Mobile terminal comprising means configured to transmit to a quality of service application equipment a type of service associated with the service that the mobile terminal accesses and a module for selecting an access point of a communication network, said selection module being configured to select said access point from a list of access points that is received from an access point discovery server of said communication network, said list of access points being generated by selecting at least one access point compatible with a quality of service class determined by a quality of service application equipment on the basis of the type of service that the mobile terminal accesses.

9. Communication network comprising a plurality of access points capable of delivering a service to a mobile terminal, a quality of service application equipment and an access point discovery server,
the quality of service application equipment being configured to receive (S2) a message containing an identifier of a type of service that the mobile terminal is accessing and to determine a service class on the basis of the type of service that the mobile terminal accesses and to transmit (S5) said quality of service class to the access point discovery server; and the access point discovery server being configured to generate (S7) a list of access points by selecting at least one access point compatible with the quality of service class received from the quality of service application equipment and to transmit said list of access points to the mobile terminal.

10. Computer program product comprising code instructions for executing a method according to one of Claims 1 to 5 when said computer program product is executed by a processor.
